(19) Europäisches Patentamt
European Patent Office
Office européen des brevets

(11) **EP 3 543 283 B1**

(12) **EUROPEAN PATENT SPECIFICATION**

(45) Date of publication and mention
of the grant of the patent:
**02.11.2022 Bulletin 2022/44**

(21) Application number: **17871390.5**

(22) Date of filing: **16.11.2017**

(51) International Patent Classification (IPC):
**C08J 9/12** *(2006.01)*   **B32B 5/18** *(2006.01)*
**C08J 9/18** *(2006.01)*   **C08J 9/34** *(2006.01)*

(52) Cooperative Patent Classification (CPC):
**C08J 9/34; B32B 5/18; C08J 9/12; C08J 9/18;**
C08J 2300/12; C08J 2367/00

(86) International application number:
**PCT/JP2017/041247**

(87) International publication number:
**WO 2018/092838 (24.05.2018 Gazette 2018/21)**

(54) **FOAM-MOLDED BODY AND METHOD FOR PRODUCING FOAM-MOLDED BODY**

SCHAUMSTOFF-FORMKÖRPER UND VERFAHREN ZUR HERSTELLUNG EINES
SCHAUMSTOFF-FORMKÖRPERS

CORPS MOULÉ EN MOUSSE ET PROCÉDÉ DE PRODUCTION D'UN CORPS MOULÉ EN MOUSSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2016 JP 2016225038**

(43) Date of publication of application:
**25.09.2019 Bulletin 2019/39**

(73) Proprietor: **Sumitomo Chemical Company,
Limited
Tokyo 104-8260 (JP)**

(72) Inventors:
• **SAKAI Taiga
Tsukuba-shi, Ibaraki 300-3294 (JP)**
• **MAEDA Mitsuo
Tokyo 104-8260 (JP)**

(74) Representative: **Vossius & Partner
Patentanwälte Rechtsanwälte mbB
Siebertstrasse 3
81675 München (DE)**

(56) References cited:
JP-A- S6 461 087    JP-A- 2003 138 054
JP-A- 2003 138 054    JP-A- 2003 170 432
JP-A- 2003 170 432    JP-A- 2004 250 620
JP-A- 2013 007 004    JP-A- 2013 185 044
JP-A- 2013 185 044    JP-A- 2015 010 117
JP-A- 2015 147 882    US-A1- 2012 025 421
US-A1- 2013 116 354

## Description

[Technical Field]

The present invention relates to a foamed molded article and a method for producing a foamed molded article.

[Background Art]

Conventionally, since plastics are lighter than metals, they are widely adopted in various application fields such as electrical and electronic components, automobile parts, miscellaneous goods and the like. In addition, as the demand for further weight reduction of plastics is increasing, a technique of using a chemical foaming agent and a technique of foaming a resin by heating or the like are known as techniques of lowering the specific gravity and reducing the weight of a resin product.

Patent Documents 1 and 2 describe a foamed molded article of a liquid crystalline polyester resin which is foamed and molded using a supercritical fluid.

Patent Document 3 describes a method for producing a liquid crystal polyester molded article, the method comprising a step of molding the liquid crystal polyester composition which has been obtained by a method for producing a liquid crystal polyester composition, comprising feeding a liquid crystal polyester and a polyhydric alcohol fatty acid ester into an extruder having a vent portion, followed by melt-kneading in a state where the degree of decompression of the vent portion is -0.06 MPa or less in terms of a gauge pressure.

Patent Document 4 describes a method of manufacturing a foam molded article having good appearance without lowering the strength thereof, and the foam molded article manufactured thereby. The described method uses a thermoplastic resin containing a foaming agent.

[Citation List]

[Patent Documents]

[Patent Document 1]: Japanese Unexamined Patent Application, First Publication No. 2013-185044

[Patent Document 2]: Japanese Unexamined Patent Application, First Publication No. 2003-138054

[Patent Document 3]: US 2012/0025421 A1

[Patent Document 4]: JP-A-2003-170432

[Summary of Invention]

[Technical Problem]

However, the weight reduction rate of a foamed molded article of a conventional liquid crystalline polyester is not sufficiently high, and further weight reduction is required.

Further, recently, foamed molded articles using resins are used in a wide variety of fields, and in addition to weight reduction, other physical properties are also required in some cases. For example, when used for each part of an automobile, vibration damping properties are also required in addition to weight reduction of the foamed molded article. However, there is a trade-off relationship between the weight reduction and the vibration damping properties of the foamed molded article, and if the degree of weight reduction is increased, the vibration damping properties tend to be lowered.

That is, a foamed molded article which is sufficiently lightened and has sufficient vibration damping properties, and a method for producing the aforementioned foamed molded article are desired.

The present invention has been made in view of such circumstances, with an object of providing a foamed molded article which is lightweight and excellent in vibration damping properties and a method for producing the aforementioned foamed molded article.

[Solution to Problem]

The present invention relates to a foamed molded article of a liquid crystalline aromatic polyester resin composition and to a method for producing such a foamed molded article, as defined in the claims, respectively.

[Advantageous Effects of Invention]

According to the present invention, it is possible to provide a foamed molded article which is lightweight and excellent in vibration damping properties and a method for producing the aforementioned foamed molded article.

[Brief Description of Drawings]

FIG. 1 is a cross-sectional view of an example of a foamed molded article according to one embodiment of the present invention.
FIG. 2 is a graph showing vibration resonance characteristics of a molded article material.
FIG. 3 is a schematic view of an injection molding machine used for producing a foamed molded article according to one embodiment of the present invention.
FIG. 4 is a schematic view for explaining a position for cutting out a test piece used for the measurement of flexural modulus in Examples.
FIG. 5 is a cross-sectional photograph of a foamed molded article produced in Examples.

[Description of Embodiments]

<Foamed molded article>

The present invention relates to a foamed molded article as defined in the claims, formed from a liquid crystalline aromatic polyester resin composition (hereinafter sometimes referred to as "resin composition"), which includes an inner layer composed of a foamed layer and an outer layer composed of a non-foamed layer, and in which a weight reduction rate represented by the following formula (1) is 20% or more and 90% or less.

$$\text{Weight reduction rate } (\%) = 100 \times (dB - dA) / dB \ (1)$$

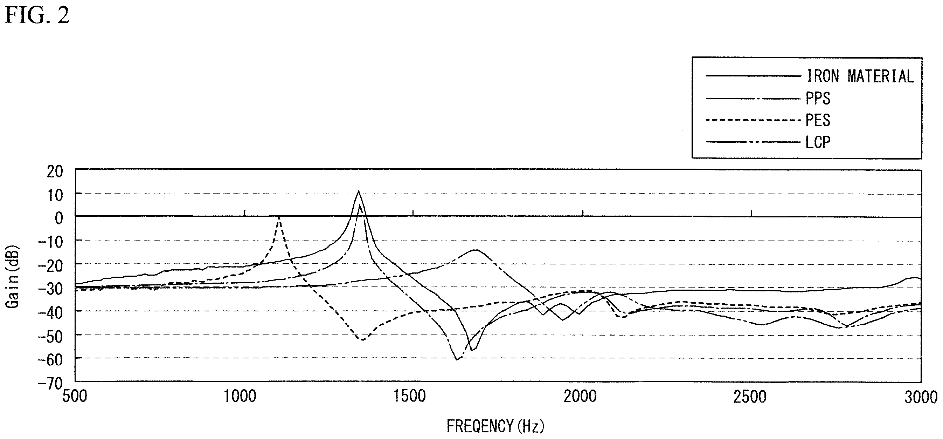

In the formula (1), dB represents a true density ($g/cm^3$) of the aforementioned liquid crystalline aromatic polyester resin composition and dA represents an apparent density ($g/cm^3$) of the aforementioned foamed molded article.

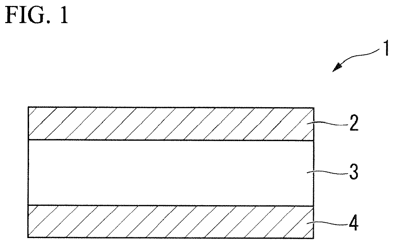

FIG. 1 shows a cross-sectional view of an example of a foamed molded article according to one embodiment of the present invention. In FIG. 1, a foamed molded article 1 includes an inner layer 3 composed of a foamed layer, and an outer layer 2 and an outer layer 4 composed of non-foamed layers. The foamed layer 3 is a foamed layer formed by using a supercritical fluid which is a gas under normal temperature and normal pressure as a foaming agent.
In the present invention, the "non-foamed layer" means a layer having fewer closed cell structures compared to a foamed layer present within a distance of more than 0 $\mu$m and 1,000 $\mu$m or less from the surface of the foamed molded article. The "closed cell structure" means a structure in which foams are not continuous and are arranged independently of each other, and through which a gas or a liquid cannot pass.
The foamed molded article of the present embodiment can be generally applied to any application to which liquid crystalline polyester resins can be applied. The foamed molded article of the present embodiment can be suitably used for each part for automobiles, because, in addition to weight reduction of the foamed molded article, the vibration damping properties are also high.
In general, resin materials tend to vibrate more easily than metal materials and tend not to have favorable vibration damping properties, since the resin materials are lighter than the metal materials. A graph showing vibration resonance characteristics of a molded article material is shown in FIG. 2. In the graph of FIG. 2, the vertical axis represents "Gain (dB)" which indicates the strength of vibration, and the horizontal axis represents "Frequency (Hz)". It is indicated that the sharper the peak in the graph shown in FIG. 2, the more resonance tends to occur at a certain frequency. In FIG. 2, the abbreviations "PPS", "PES" and "LCP" mean "polyphenylene sulfide", "polyether sulfone" and "liquid crystalline polyester", respectively. As shown in Fig. 2, LCP has a broader peak than those of PPS and PES. This means that LCP is more difficult to resonate than PPS and PES, and even if it resonates, the vibration damping capacity is high. That is, it means that LCP is a resin excellent in vibration damping properties.

In the foamed molded article of the present embodiment, since the frequencies at which the foamed layer 3 and the non-foamed layers 2 and 4 resonate are different, the vibration can be attenuated. That is, the foamed molded article of the present embodiment can realize weight reduction by including the foamed layer 3, and furthermore, can realize high vibration damping properties by including the foamed layer 3 and the non-foamed layers 2 and 4.

In the present embodiment, the weight reduction rate represented by the following numerical formula (1) is 20% or more and 90% or less, preferably 30% or more and 90% or less, and more preferably 40% or more and 90% or less. In another aspect, the weight reduction rate may be from 26 to 60%.

When the weight reduction rate is within the above range, it is possible to obtain a foamed molded article superior in the balance between weight reduction and vibration damping properties as compared with a foamed molded article produced by a conventional method.

In the present embodiment, the "weight reduction rate" means a value obtained based on the numerical formula (1).

$$\text{Weight reduction rate } (\%) = 100 \times (dB - dA) \,/\, dB \quad (1)$$

In the numerical formula (1), dB represents the true density (g/cm$^3$) of the liquid crystalline aromatic polyester resin composition, and dA represents the apparent density (g/cm$^3$) of the foamed molded article.

In the above numerical formula (1), by using a test piece cut out from a molded article obtained by melt-molding a pellet composed of a liquid crystalline aromatic polyester resin composition without foaming into a predetermined size (for example, a test piece having a width of 13 mm, a length of 125 mm and a thickness of 2 to 4 mm) as a standard sample, and drying this standard sample at 200°C for 5 hours, the true density of the liquid crystalline aromatic polyester resin composition can be calculated from the weight after drying and the volume obtained from the size measurement.

By drying a test piece cut out from a foamed molded article into a predetermined size (for example, a test piece having a width of 13 mm, a length of 125 mm and a thickness of 2 to 4 mm) at 200°C for 5 hours, the apparent density of the foamed molded article can be calculated from the weight after drying and the volume obtained from the size measurement.

It should be noted that in the case of cutting out a test piece from a foamed molded article, a portion where the non-foamed layer, the foamed layer and the non-foamed layer are configured in this order may be arbitrarily cut out.

In the present embodiment, by changing the amount of the supercritical fluid used as a foaming agent, it is possible to control the weight reduction rate of the obtained foamed molded article within the above-mentioned range.

Further, the obtained foamed molded article may be subsequently subjected to molding processing (secondary processing), or may be molded at the same time as foaming to obtain a foamed molded article. Since it is possible to obtain a molded article with high productivity, it is more preferable to obtain a foamed molded article by molding and foaming simultaneously.

The foamed molded article of the present invention can be generally applied to any application to which liquid crystalline polyester resins can be applied. For example, in the field of automobiles, as injection molded articles for automotive interior materials, injection molded articles for ceiling materials, injection molded articles for wheelhouse covers, injection molded articles for trunk room linings, injection molded articles for instrument panel skin materials, injection molded articles for handle covers, injection molded articles for armrests, injection molded articles for headrests, injection molded articles for seat belt covers, injection molded articles for shift lever boots, injection molded articles for console boxes, injection molded articles for horn pads, injection molded articles for knobs, injection molded articles for airbag covers, injection molded articles for various trims, injection molded articles for various pillars, injection molded articles for door lock bezels, injection molded articles for glove boxes, injection molded articles for defroster nozzles, injection molded articles for scuff plates, injection molded articles for steering wheels, injection molded articles for steering column covers and the like can be mentioned. Examples of injection molded articles for automotive exterior materials include injection molded articles for bumpers, injection molded articles for spoilers, injection molded articles for mud guards, and injection molded articles for side moldings. Examples of other injection molded articles for automobile parts include injection molded articles for automotive headlamps, injection molded articles for glass run channels, injection molded articles for weather strips, injection molded articles for drain hoses, injection molded articles for hoses such as injection molded articles for window washer tubes, injection molded articles for tubes, injection molded articles for rack and pinion boots and injection molded articles for gaskets. More specifically, EGI tubes, armrest inserts, armrest guides, armrest bases, outer door handles, ash tray panels, ash tray lamp housings, upper garnishes, antenna inner tubes, ignition coil cases, ignition coil bobbins, inside door lock knobs, instrument panel cores, intercooler tanks, inner lock knobs, window glass sliders, window pivots, window moldings, window regulator handles, window regulator handle knobs, water pump impellers, washer nozzles, washer motor housings, air spoilers, air ducts, air duct intakes, air ventilation fins, air conditioning actuators, air control valves, air conditioning magnetic clutch bobbins, air conditioning control knobs, air flow meter housings, air regulators, extract grilles, emblems, oil cleaner cases, oil level gauges, oil brake valves, gasoline chambers, gasoline floats, gasoline injection nozzles, canisters, carburetors, carburetor valves, cooler sirocco fans, air conditioner vacuum pumps, cooling fans, clutch oil reservoirs, glove door outers, glove boxes, glove box knobs, glove box lids, condenser casings, compressor valves, commutators, circuit boards, surge tanks, thermostat housings, side brake wire protectors, side mirror stays, side mirror housings, side moldings, side louvers, silencers, silent gears, sun visor shafts, sun visor brackets, sun visor holders, sunroof frames, seat belt through anchors, seat belt tongue plates, seat belt buckles, seat belt retractor gears, generator covers, generator coil bobbins, generator bushes, shift arm coatings, shift lever knobs, junction boxes, cylinder head covers, switches, switch bases, starter interval gears, starter coil bobbins, starter levers, steering column covers, steering ball joints, steering horn pads, speed sensors, speedometer controls, speedometer driven gears, spoilers, thrust washers, sleeve bearings, center clusters, solenoid valves, timing belt covers, change lever covers, distributor caps, distributor point bushes, distributor insulated terminals, tailgates, doors, door side moldings, door trims, door latch covers, trunk rear aprons, trunk lower back finishers, transmission covers, transmission cases, transmission bushes, torque converter thrust washers, vacuum controllers, back horn housings, hatchback slide brackets, balance shaft gears, power window switch board cases, power seat gear housings, power steering tanks, bumpers, bumper clips, bumper moldings, heater core tanks, heater valves, piston valves, fuse boxes, pillar garnishes, pillar louvers, fenders, fuel injectors, fuel injector connectors, fuel injector nozzle covers, fuel strainers, fuel sedimenter cases, fuel check valves, fuel filler caps, fuel filter housings, fuel lids, brush holders, brake oil floats, brake oil reservoirs, brake reservoir caps, front end bumpers, front fenders, headrest guides, helical gears, wheel cap centers, wheel center hub caps, wheel full caps, bonnet clips, bonnet hood loopers, master cylinder pistons, meter connectors, meter panels, meter hoods, motor gears, molding clips, license plates, license plate pockets, radiator grilles, radiator tanks, lamp sockets, lamp reflectors, rear shelves, rear end bumpers, rear shelf sides, lid outers, lid clusters, lid clusters, retractable headlamp covers, relay cases, relay terminal base case coil bobbins, roof side rail garnishes, roof rails, room mirror stays, regulator cases, regulator handles, resonators, wiper arm heads, wiper arm head covers, wiper motor insulators, wiper levers, wire harness connectors, safety belt mechanism parts, rotation sensors, various switch boards, band clips for electrical wiring, electric mirror bases, interior clips, exhaust gas valves, exhaust gas pump side seals, and the like can be mentioned.

In addition, sensors, LED lamps, connectors, sockets, resistors, relay cases, switches, coil bobbins, capacitors, variable capacitor cases, optical pickups, oscillators, various terminal boards, transformers, plugs, printed circuit boards, tuners, speakers, microphones, headphones, small motors, magnetic head bases, power modules, semiconductors, liquid crystal displays, FDD carriages, FDD chassis, motor brush holders, parabolic antennas, computer related parts, microwave oven parts, acoustic and audio equipment parts, lighting parts, air conditioner parts, office computer related parts, telephone/facsimile related parts, copying machine related parts and the like can be mentioned.

« Resin composition »

The liquid crystalline aromatic polyester resin composition used in the present invention includes a liquid crystalline aromatic polyester resin, and further includes a scale-like inorganic filler, wherein said scale-like inorganic filler is talc or mica.

In the present embodiment, homogeneous foaming and a high degree of weight reduction can be realized by including the scale-like inorganic filler in the aforementioned resin composition. In other words, the scale-like inorganic filler dispersed in the resin composition serves as a starting point for foaming, so that foaming in the resin composition can be homogenized. Further, since it is possible to form an inner layer as a foamed layer without damaging outer layers as non-foamed layers by using the scale-like inorganic filler, it is possible to prevent the gas composed of a foaming agent from diffusing to the outside of the non-foamed layers and to increase the weight reduction rate of the inner layer.

(Liquid crystalline aromatic polyester resin)

A liquid crystalline aromatic polyester resin (hereinafter sometimes referred to as liquid crystalline aromatic polyester) is an aromatic polyester exhibiting optical anisotropy at the time of melting. The liquid crystalline aromatic polyester comprises a repeating unit represented by the following formula (1) (hereinafter sometimes referred to as "repeating unit (1)"), a repeating unit represented by the following formula (2) (hereinafter sometimes referred to as "repeating unit (2)") and a repeating unit represented by the following formula (3) (hereinafter sometimes referred to as "repeating unit (3)"):

$$(1) \quad -O-Ar^1-CO-$$

$$(2) \quad -CO-Ar^2-CO-$$

$$(3) \quad -X-Ar^3-Y-$$

(4)     -Ar$^4$Z-Ar$^5$-

In the formulas, Ar$^1$ represents a phenylene group, a naphthylene group or a biphenylylene group; Ar$^2$ and Ar$^3$ each independently represent a phenylene group, a naphthylene group, a biphenylylene group or a group represented by the above formula (4); X and Y each independently represent an oxygen atom or an imino group (-NH-); Ar$^4$ and Ar$^5$ each independently represent a phenylene group or a naphthylene group; Z represents an oxygen atom, a sulfur atom, a carbonyl group, a sulfonyl group or an alkylidene group; and hydrogen atoms of Ar$^1$, Ar$^2$ or Ar$^3$ may each independently be substituted with a halogen atom, an alkyl group or an aryl group.

Examples of the halogen atom include a fluorine atom, a chlorine atom, a bromine atom and an iodine atom. The alkyl group is preferably an alkyl group having 1 to 10 carbon atoms, and examples thereof include a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group and an n-decyl group. The aryl group is preferably an aryl group having 6 to 20 carbon atoms, and examples thereof include a phenyl group, an o-tolyl group, an m-tolyl group, a p-tolyl group, a 1 -naphthyl group and a 2-naphthyl group. When the aforementioned hydrogen atom is substituted with any of these groups, the numbers of substituents in Ar$^1$, Ar$^2$ and Ar$^3$ are each independently 2 or less, and preferably 1 or less.

The alkylidene group represented by Z is preferably an alkylidene group having 1 to 10 carbon atoms, and examples thereof include a methylene group, an ethylidene group, an isopropylidene group, an n-butylidene group and a 2-ethylhexylidene group.

The repeating unit (1) is a repeating unit derived from an aromatic hydroxycarboxylic acid. As the repeating unit (1), a repeating unit derived from p-hydroxybenzoic acid (that is, Ar$^1$ is a p-phenylene group) or a repeating unit derived from 6-hydroxy-2-naphthoic acid (that is, Ar$^1$ is a 2,6-naphthylene group) is preferable.

The repeating unit (2) is a repeating unit derived from an aromatic dicarboxylic acid. As the repeating unit (2), a repeating unit derived from terephthalic acid (that is, Ar$^2$ is a p-phenylene group), a repeating unit derived from isophthalic acid (that is, Ar$^2$ is an m-phenylene group), or a repeating unit derived from 2,6-naphthalenedicarboxylic acid (that is, Ar$^2$ is a 2,6-naphthylene group) is preferable.

The repeating unit (3) is a repeating unit derived from an aromatic diol, an aromatic hydroxylamine or an aromatic diamine. As the repeating unit (3), a repeating unit derived from hydroquinone, p-aminophenol or p-phenylenediamine (that is, Ar$^3$ is a p-phenylene group) or a repeating unit derived from 4,4'-dihydroxybiphenyl, 4-amino-4'-hydroxybiphenyl or 4,4'-diaminobiphenyl (that is, Ar$^3$ is a 4,4'-biphenylylene group) is preferred.

It should be noted that in the present specification, the expression "derived" means that the chemical structure is changed due to polymerization of raw material monomers, while no other structural change occurs.

In the case where the liquid crystalline aromatic polyester according to the present invention contains repeating units represented by each of the repeating units (1), (2) and (3), with respect to the total amount (number of moles) of all the repeating units constituting the liquid crystalline aromatic polyester, the content of the repeating unit (1) is 30 mol% or more, preferably from 30 to 80 mol%, more preferably from 40 to 70 mol%, and still more preferably from 45 to 65 mol%; the content of the repeating unit (2) is 35 mol% or less, preferably from 10 to 35 mol%, more preferably from 15 to 30 mol%, and still more preferably from 17.5 to 27.5 mol%; and the content of the repeating unit (3) is 35 mol% or less, preferably from 10 to 35 mol%, more preferably from 15 to 30 mol%, and still more preferably from 17.5 to 27.5 mol%. However, the total amount of the repeating unit (1), the repeating unit (2) and the repeating unit (3) does not exceed 100 mol%.

The higher the content of the repeating unit (1), the more the melt fluidity, heat resistance and strength / rigidity of the liquid crystalline polyester tend to improve, but when it exceeds 80 mol%, the melting temperature and melt viscosity tend to be high, and the temperature required for molding tends to be high.

The molar ratio of the content of the repeating unit (2) to the content of the repeating unit (3) is from 0.9 / 1 to 1 / 0.9, preferably from 0.95 / 1 to 1 / 0.95, and more preferably from 0.98 / 1 to 1 / 0.98.

The liquid crystalline aromatic polyester according to the present invention may have two or more types of repeating units (1) to (3) each independently. The liquid crystalline aromatic polyester may have a repeating unit other than the repeating units (1) to (3), and the content thereof is 10 mol% or less, and preferably 5 mol% or less, with respect to the total amount (number of moles) of all the repeating units constituting the liquid crystalline aromatic polyester.

From the viewpoint of obtaining a liquid crystalline aromatic polyester having a low melt viscosity, it is preferable that each of X and Y in the repeating unit (3) is an oxygen atom (that is, it is a repeating unit derived from an aromatic diol), and a liquid crystalline aromatic polyester having a repeating unit in which each of X and Y is an oxygen atom as the only repeating unit (3) is more preferable.

The flow starting temperature of the liquid crystalline aromatic polyester of the foamed molded article according to one embodiment of the present invention is preferably 280°C or higher, more preferably 290°C or higher, and still more preferably 295°C or higher, and at the same time, is preferably 380°C or less, and more preferably 350°C or less.

That is, the flow starting temperature of the liquid crystalline aromatic polyester is preferably 280°C or more and 380°C or less, more preferably 290°C or more and 380°C or less, and still more preferably 295°C or more and 350°C or less.

The higher the flow starting temperature, the easier it is to improve heat resistance and water resistance. However, if it is too high, high temperature is required for melting, and thermal degradation tends to occur during molding, and the viscosity at the time of melting increases to lower the fluidity.

That is, when the flow starting temperature is within the above range, the heat resistance and water resistance are easily improved, and it is possible to prevent the thermal degradation during molding and the increase in viscosity and decrease in fluidity during melting.

It should be noted that the "flow starting temperature" which is also referred to as flow temperature or fluidity temperature and serves as an indicator of the molecular weight of the liquid crystalline aromatic polyester, is a temperature at which a melt viscosity of 4,800 Pa·s (48,000 poise) is exhibited when using a capillary rheometer having a nozzle with an inner diameter of 1 mm and a length of 10 mm and extruding the heated melt of the liquid crystalline aromatic polyester from the nozzle at a rate of temperature increase of 4°C/min under a load of 9.8 MPa (for example, see "Liquid Crystalline Polymer - Synthesis, Molding, and Application -" edited by Naoyuki Koide, pp. 95-105, published by CMC Publishing Co., Ltd., published on June 5, 1987).

For the liquid crystalline aromatic polyester according to the foamed molded article of the present embodiment, commercially available products may be used as they are, or it may be produced by a known method.

As a method for producing the liquid crystalline aromatic polyester, for example, a method for producing a liquid crystalline aromatic polyester by polymerizing (polycondensing) an aromatic hydroxycarboxylic acid, an aromatic dicarboxylic acid, and at least one compound selected from the group consisting of an aromatic diol, an aromatic hydroxyamine and an aromatic diamine can be mentioned.

In addition, for example, a method for producing a liquid crystalline aromatic polyester by polymerizing one obtained by polymerizing a plurality of types of aromatic hydroxycarboxylic acids, an aromatic dicarboxylic acid, and at least one compound selected from the group consisting of an aromatic diol, an aromatic hydroxyamine and an aromatic diamine can be mentioned.

Furthermore, for example, a method for producing a liquid crystalline aromatic polyester by polymerizing a polyester such as polyethylene terephthalate and an aromatic hydroxycarboxylic acid can be mentioned.

The content of the repeating unit containing a 2,6-naphthylene group of the liquid crystalline aromatic polyester can be controlled, for example, by changing the charge ratio of monomers at the time of polycondensation.

It is possible to produce, for example, by preparing a monomer that derives the repeating unit (1), that is, a predetermined aromatic hydroxycarboxylic acid; a monomer that derives the repeating unit (2), that is, a predetermined aromatic dicarboxylic acid; and a monomer that derives the repeating unit (3), that is, a predetermined aromatic diol, so that the total amount of monomers having a 2,6-naphthylene group, that is, the total amount of 6-hydroxy-2-naphthoic acid, 2,6-naphthalenedicarboxylic acid and 2,6-naphthalenediol is from 40 to 75 mol% with respect to the total amount (number of moles) of all the monomers, followed by polymerization (polycondensation).

At this time, the aromatic hydroxycarboxylic acid, the aromatic dicarboxylic acid and the aromatic diol may be each independently replaced partially or entirely and use instead a polymerizable derivative thereof.

Examples of the polymerizable derivative of a compound having a carboxyl group, such as an aromatic hydroxycarboxylic acid and an aromatic dicarboxylic acid, include those obtained by converting a carboxyl group into an alkoxycarbonyl group or an aryloxycarbonyl group, those obtained by converting a carboxyl group into a haloformyl group, and those obtained by converting a carboxyl group into an acyloxycarbonyl group.

Examples of the polymerizable derivative of a compound having a hydroxyl group, such as an aromatic hydroxycarboxylic acid and an aromatic diol, include those obtained by acylating a hydroxyl group and converting it to an acyloxyl group.

Further, the liquid crystalline aromatic polyester according to the foamed molded article of the present embodiment is preferably produced by melt polymerization of a raw material monomer corresponding to the constituting repeating unit and solid phase polymerization of the obtained polymer (prepolymer). As a result, a liquid crystalline aromatic polyester having high heat resistance, water resistance and strength can be produced with favorable operability.

Further, the melt polymerization may be carried out in the presence of a catalyst, and examples of the catalyst include metal compounds such as magnesium acetate, stannous acetate, tetrabutyl titanate, lead acetate, sodium acetate, potassium acetate and antimony trioxide, and nitrogen-containing heterocyclic compounds such as N,N-dimethylaminopyridine and N-methylimidazole, and nitrogen-containing heterocyclic compounds are preferably used.

The content of the liquid crystalline aromatic polyester resin contained in the resin composition according to the present embodiment is 80 parts by mass or more and 99 parts by mass or less, and preferably 90 parts by mass or more and 97 parts by mass or less, with respect to 100 parts by mass of the aforementioned resin composition.

(Scale-like inorganic filler)

In the present specification, the term "scale-like filler" means a scale-like inorganic filler having an average thickness of 0.01 to 50 $\mu$m and an aspect ratio (aspect ratio = (average particle diameter) / (average thickness)) with respect to this thickness of 3 to 10,000.

Examples of the scale-like inorganic filler include talc, mica, graphite, wollastonite, barium sulfate and calcium carbonate. The mica may be muscovite, phlogopite, fluorophlogopite or tetrasilicon mica. The inventive liquid crystalline aromatic polyester resin composition comprises a scale-like inorganic filler, wherein said filler is talc or mica.

By using the scale-like inorganic filler, it is possible to form an inner layer as a foamed layer satisfactorily without damaging an outer layer as a non-foamed layer.

The content of the scale-like inorganic filler contained in the resin composition according to the present embodiment is 1 part by mass or more and 20 parts by mass or less, preferably 2 parts by mass or more and 18 parts by mass or less, more preferably 3 parts by mass or more and 17 parts by mass or less, and particularly preferably 5 parts by mass or more and 10 parts by mass or less with respect to 100 parts by mass of the aforementioned resin composition. When the content of the scale-like inorganic filler is within the above range, foams with higher uniformity can be formed, and foaming can also be performed without damaging the non-foamed layer.

(Fibrous inorganic filler)

The resin composition according to the present embodiment may further contain a fibrous inorganic filler. The number average fiber diameter of the fibrous inorganic filler is preferably 15 $\mu$m or more and 25 $\mu$m or less, and more preferably 16 $\mu$m or more and 24 $\mu$m or less.

One type of the fibrous filler may be used alone, or two or more types thereof may be used in combination.

The content of the fibrous inorganic filler contained in the aforementioned resin composition may be 0 parts by mass or more and 5 parts by mass or less, 3 parts by mass or less, or 1 part by mass or less, with respect to 100 parts by mass of the aforementioned resin composition, and may not be included. When the content of the fibrous inorganic filler is within the above range, it is possible to prevent outgassing caused by exposure of the fibrous inorganic filler to the non-foamed layer and to form an inner layer as a foamed layer satisfactorily.

Examples of the fibrous inorganic filler include glass fibers; carbon fibers such as polyacrylonitrile (PAN)-based carbon fibers and pitch-based carbon fibers; ceramic fibers such as silica fibers, alumina fibers and silica alumina fibers; and metal fibers such as stainless steel fibers. In addition, examples of the fibrous inorganic filler also include whiskers such as potassium titanate whisker, barium titanate whisker, wollastonite whisker, aluminum borate whisker, silicon nitride whisker and silicon carbide whisker.

(Other components)

The resin composition according to the present embodiment may further contain at least one other component (additive) in addition to the above-mentioned liquid crystalline aromatic polyester resin and the scale-like inorganic filler as long as the effects of the present invention are not impaired.

That is, in one aspect, the resin composition according to the present embodiment includes the above-mentioned liquid crystalline aromatic polyester resin, the scale-like inorganic filler, and, if desired, at least one member selected from the group consisting of a fibrous inorganic filler and an additive.

For example, as the additive, mold release agents such as fluororesins and metal soaps, colorants such as pigments including titanium oxide, and dyes, antioxidants, thermal stabilizers, ultraviolet absorbers, antistatic agents, surfactants and the like may be added as a component. The content of these additives is preferably 0.01 parts by mass or more and 5 parts by mass or less with respect to 100 parts by mass of the liquid crystalline aromatic polyester resin composition.

<Method for producing foamed molded article>

A method for producing a foamed molded article according to the present invention includes a step of melt-kneading a mixture containing the above-described resin composition and a supercritical fluid, and a step of foam molding the aforementioned mixture by lowering at least one of a pressure and a temperature of the aforementioned melt-kneaded mixture to below a critical point of the aforementioned supercritical fluid.

In order to facilitate handling in the method for producing a foamed molded article, it is preferable that the aforementioned resin composition is melt-kneaded and pelletized in advance using an extruder. Further, since the resin composition contains a scale-like inorganic filler, it is possible to uniformly disperse the scale-like inorganic filler in the liquid crystalline aromatic polyester resin composition by melt-kneading in advance.

The melt-kneaded resin composition is usually melt-molded. Examples of the melt-molding method include an injection molding method, an extrusion molding method such as a T-die method and an inflation method, a blow molding method, a vacuum molding method and a press molding method. Among them, the extrusion molding method and the injection molding method are preferable, and the injection molding method is more preferable.

As an extruder for extrusion molding, one having a cylinder, at least one screw disposed in the cylinder, and at least one supply port provided in the cylinder is preferably used, and one further having at least one vent portion provided in the cylinder is more preferably used.

The supercritical fluid acts as a foaming agent for foaming the liquid crystalline aromatic polyester resin composition. The supercritical fluid has no reactivity with the liquid crystalline aromatic polyester resin composition and is preferably a gas under normal temperature and normal pressure (for example, at a temperature of 23°C and atmospheric pressure).

Here, the term "supercritical fluid" indicates a state of a substance, neither a gas, nor a liquid, nor a solid, which a substance exhibits under conditions of a specific temperature and pressure (critical point) or higher. The critical point which has a specific temperature and pressure is determined by the type of the substance.

It should be noted that in this specification, the term "supercritical fluid" means a substance showing the properties of the supercritical fluid described above. That is, the supercritical fluid in the present specification means a substance showing intermediate properties between the gaseous state and the liquid state, having a penetrating power (dissolving power) into the molten resin which is also stronger than that in the liquid state, and having a property capable of being dispersed uniformly in the molten resin.

Further, in one aspect, the term "supercritical fluid" means a substance placed under conditions of a specific temperature or pressure (critical point) or higher.

As the supercritical fluid according to the present embodiment, for example, an inert gas such as carbon dioxide, nitrogen and helium, air, oxygen, hydrogen or the like can be used. Among these examples, since nitrogen has a critical point at a temperature of -147°C and a pressure of 3.4 MPa, the normal temperature (25°C) is equal to or higher than the critical temperature. Therefore, since it is possible to prepare a supercritical fluid merely by controlling pressure, handling is easy, which is particularly preferable.

The amount of the supercritical fluid used is preferably 0.01 parts by mass or more and 10 parts by mass or less with respect to 100 parts by mass of the resin composition. When the amount of the supercritical fluid as the foaming agent is 0.01 parts by mass or more, sufficient weight reduction effects by foaming can be obtained. Further, if it is 10 parts by mass or less, it is possible to suppress the enlargement of foamed cells and to prevent the mechanical strength of a foam from decreasing.

[Melt-kneading]

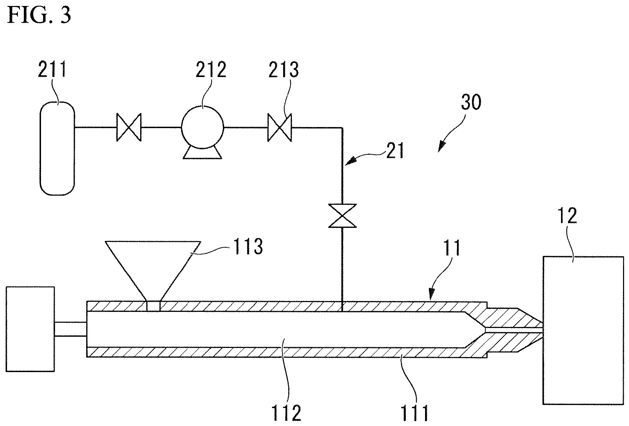

FIG. 3 is a schematic view of an injection molding machine used for producing a foamed molded article according to one embodiment of the present invention.

This injection molding machine 30 is a machine for producing a foamed molded article having a predetermined shape by using the above-mentioned liquid crystalline aromatic polyester resin composition and a foaming agent, and includes a main body 11, a mold 12, and a supercritical fluid introduction device 21 for introducing the supercritical fluid constituting a foaming agent into the main body 11.

The introduction device 21 includes a gas cylinder 211 filled with a source gas of the above-described supercritical fluid, a booster 212 for raising the pressure of the source gas from the gas cylinder 211 to a critical pressure, and a control valve 213 for controlling the amount of the source gas pressurized to a critical pressure (supercritical fluid) introduced into a cylinder 111. The source gas is heated by adiabatically compressing the source gas in the booster 212, but when the temperature reached is lower than the critical temperature, if necessary, a temperature raising device that increases the temperature of the source gas from the gas cylinder 211 to the critical temperature is used.

Next, a method for producing a foamed molded article using this injection molding machine 30 will be described.

First, the above-described liquid crystalline aromatic polyester resin composition is charged from a hopper 113 into the cylinder 111 and heated and kneaded in the cylinder 111 to melt the liquid crystalline aromatic polyester resin composition. On the other hand, the gas cylinder 211 is opened, and the pressure and the temperature of the source gas is increased to the critical point or higher by the booster 212. The obtained supercritical fluid is introduced into the cylinder 111 by opening the control valve 213 and impregnated into the melted liquid crystalline aromatic polyester resin composition, and the mixture of the liquid crystalline aromatic polyester resin composition and the supercritical fluid is melt-kneaded. At this time, the temperature and pressure inside the cylinder is set to at least the critical point of the substance related to the supercritical fluid.

[Foam molding]

A mixture of the melt-kneaded liquid crystalline aromatic polyester resin composition and the supercritical fluid (hereinafter sometimes referred to as molten resin) described above is moved by a screw 112 and injected into the mold 12 from inside the cylinder 111. At this time, until the injection of the molten resin into the mold 12 is completed, in order to maintain the supercritical state of the supercritical fluid contained in the molten resin, the mold 12 is clamped and a counter pressure may also be applied.

The temperature of the molten resin containing the supercritical fluid in the cylinder 111 decreases in the process of being injected into and maintained in the mold 12 whose temperature is adjusted to the desired temperature with a heater or the like from the inside of the cylinder 111 by the screw 112. Furthermore, the pressure which was equal to or higher than the critical pressure approaches the normal pressure, and the source gas (supercritical fluid) in the supercritical state changes into the gaseous state. That is, the source gas in the supercritical state which is dispersed in the molten resin changes from the supercritical state to a gas, whereby the volume expands and a foamed molded article is obtained.

As a method for bringing the pressure equal to or higher than the critical pressure close to the normal pressure, for example, a method for moving at least one mold in the mold opening direction (core back operation) at a stage of filling the molten resin in the mold and expanding the volume inside the mold is adopted. At this time, the core back speed is preferably in the range of 0.1 to 10 mm/sec, and more preferably in the range of 1 to 5 mm/sec. When the core back speed is within the above range, it is possible to form a foam structure having a more uniform cell state. It should be noted that the core back speed need not be constant.

It should be noted that the non-foamed layer is formed due to cooling and solidification of the resin on the surface of the mold before the resin foams, and the foamed layer is formed due to foaming by vaporization of the supercritical fluid before the resin solidifies.

Then, after cooling and solidifying the resin in the mold 12, the molded product is taken out of the mold 12 after a predetermined cooling time has elapsed.

In the method for producing a foamed molded article of the present embodiment, it is possible to also suitably produce a thin foamed molded article having a thickness of 1.5 mm or more and 10 mm or less.

Another aspect of the present invention is

a foamed molded article which is a foamed molded article of a liquid crystalline aromatic polyester resin composition, wherein the aforementioned foamed molded article includes an inner layer and an outer layer, the aforementioned inner layer is a foamed layer, the aforementioned outer layer is a non-foamed layer;

the liquid crystalline aromatic polyester resin composition includes a liquid crystalline aromatic polyester resin, a scale-like inorganic filler and, if desired, at least one member selected from the group consisting of a fibrous inorganic filler and an additive;

the aforementioned liquid crystalline aromatic polyester resin includes

a repeating unit (1) derived from p-hydroxybenzoic acid, a repeating unit (2) which is at least one member selected from the group consisting of a repeating unit derived from terephthalic acid and a repeating unit derived from isophthalic acid, and a repeating unit (3) derived from 4,4'-dihydroxybiphenyl;

the aforementioned scale-like inorganic filler is talc or mica;

a content of the aforementioned liquid crystalline aromatic polyester resin is 80 parts by mass or more and 99 parts by mass or less, and preferably 90 parts by mass or more and 97 parts by mass or less with respect to 100 parts by mass of the liquid crystalline aromatic polyester resin composition;

a content of the aforementioned scale-like inorganic filler is 1 part by mass or more and 20 parts by mass or less, preferably 2 parts by mass or more and 18 parts by mass or less, more preferably 3 parts by mass or more and 17 parts by mass or less, and still more preferably 5 parts by mass or more and 10 parts by mass or less, with respect to 100 parts by mass of the liquid crystalline aromatic polyester resin composition; and

a weight reduction rate represented by the above formula (1) is 20% or more and 90% or less, preferably 30% or more and 90% or less, and more preferably 40% or more and 90% or less.

Yet another aspect of the present invention is
a method for producing a foamed molded article which is a method for producing the aforementioned foamed molded article, the method including:

a step of melt-kneading a mixture containing the aforementioned liquid crystalline aromatic polyester resin composition and a supercritical fluid, and
a step of foam molding the aforementioned mixture by lowering at least one of a pressure and a temperature of the aforementioned melt-kneaded mixture to below a critical point of the aforementioned supercritical fluid,

wherein the aforementioned supercritical fluid is carbon dioxide, nitrogen, helium, air, oxygen or hydrogen, and is preferably nitrogen; and

a content of the aforementioned supercritical fluid in the aforementioned mixture is 0.01 parts by mass or more and 10 parts by mass or less with respect to 100 parts by mass of the aforementioned liquid crystalline aromatic polyester resin composition.

[Examples]

Hereinafter, the present invention will be described more specifically with reference to examples, but the present invention is not limited to the following examples.

[Measurement of true density of liquid crystalline aromatic polyester resin composition]

A test piece cut out from a molded article obtained by melt-molding a pellet composed of a liquid crystalline aromatic polyester resin composition without foaming into a predetermined size (a test piece having a width of 13 mm, a length of 125 mm and a thickness of 2 to 4 mm) was used as a standard sample.

This standard sample was dried at a temperature of 200°C for 5 hours or longer, and the true density of the liquid crystalline aromatic polyester resin composition was calculated from the weight after drying and the volume obtained from the size measurement.

[Measurement of apparent density of foamed molded article]

A test piece cut out from a foamed molded article into a predetermined size (a test piece having a width of 13 mm, a length of 125 mm and a thickness of 2 to 4 mm) was dried at a temperature of 200°C for 5 hours or longer, and the apparent density was calculated from the weight after drying and the volume obtained from the size measurement in the same manner as that of the true density of the liquid crystalline aromatic polyester resin composition.

[Measurement of weight reduction rate of foamed molded article]

The weight reduction rate of the foamed molded article was obtained based on the following formula (1).

$$\text{Weight reduction rate } (\%) = 100 \times (\text{dB} - \text{dA}) / \text{dB} \quad (1)$$

In the formula (1), dB represents a true density $(g/cm^3)$ of the aforementioned liquid crystalline aromatic polyester resin composition and dA represents an apparent density $(g/cm^3)$ of the aforementioned foamed molded article.

[Measurement of flexural modulus of foamed molded article]

The flexural modulus of the foamed molded article was determined by a three-point bending test.

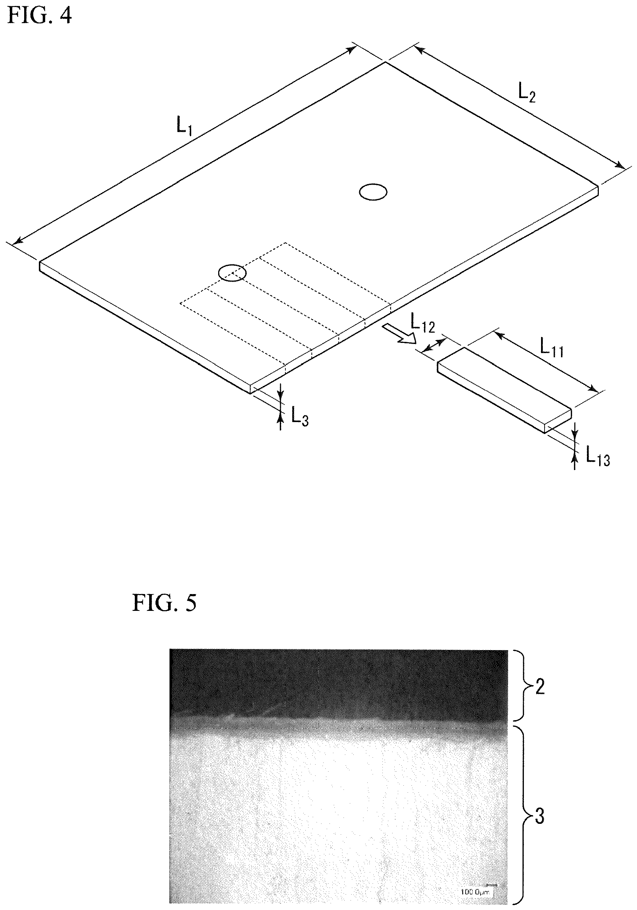

First, a foamed molded article of a flat plate shape having a large size of L1 (length: 360 mm), L2 (width: 250 mm), and L3 (thickness: 2 to 4 mm) shown in FIG. 4 was produced, and a test piece (standard sample) of L12 (width: 13 mm), L11 (length: 125 mm), and L13 (thickness: 2 to 4 mm) was cut out from the obtained foamed molded article, and a value obtained for this test piece when the test was conducted under measurement conditions of a distance between spans of 50 mm and a test speed of 1 mm/min using a universal testing machine (Tensilon RTG-1250, manufactured by A & D Co., Ltd.) was adopted.

[Measurement of vibration characteristics of foamed molded article]

The vibration characteristics of the foamed molded article were measured by the central excitation method in accordance with the test method of the vibration damping properties of the unconstrained damped composite beam (JIS K7391). From the obtained foamed molded article, a test piece as a standard sample (a test piece of L12 (width: 13 mm), L11 (length: 125 mm) and L13 (thickness: 2 to 4 mm) shown in FIG. 4), which was the same as the test piece used in the above section [measurement of flexural modulus of foamed molded article] was cut out. A measurement was made for this test piece using a vibration characteristic evaluation tester (manufactured by Ono Sokki Co., Ltd.), and the loss factor was calculated by a half power band width method.

<Production Example 1 (Production of liquid crystalline aromatic polyester A)>

994.5 g (7.2 mol) of parahydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1,347.6 g (13.2 mol) of acetic anhydride were placed in a reactor equipped with a stirrer, a torque meter, a nitrogen gas inlet tube, a thermometer and a reflux condenser. After replacing the gas in the reactor with nitrogen gas, 0.18 g of 1-methylimidazole was added under a nitrogen gas stream, and the temperature was raised to 150°C over 30 minutes, and the resulting mixture was refluxed for 30 minutes while maintaining the temperature. Thereafter, 2.4 g of 1-methylimidazole was added, and then the mixture in the reactor was heated to 320°C over 2 hours and 50 minutes while distilling off acetic acid produced as a by-product and unreacted acetic anhydride. The reaction was terminated at a time point where an increase in torque was observed, and the contents were taken out. The obtained solid content was cooled to room temperature and pulverized with a coarse grinder, and then heated from room temperature to 250°C over I hour in a nitrogen atmosphere, and the temperature was raised from 250°C to 295°C over 5 hours and held at 295°C for 3 hours to allow solid phase polymerization to proceed. The resultant was cooled to obtain a liquid crystalline polyester resin A.

<Production Example 2 (Production of liquid crystalline aromatic polyester B)>

994.5 g (7.2 mol) of p-hydroxybenzoic acid, 446.9 g (2.4 mol) of 4,4'-dihydroxybiphenyl, 239.2 g (1.44 mol) of terephthalic acid, 159.5 g (0.96 mol) of isophthalic acid, and 1,347.6 g (13.2 mol) of acetic anhydride were placed in a reactor equipped with a stirrer, a torque meter, a nitrogen gas inlet tube, a thermometer and a reflux condenser. After replacing the gas in the reactor with nitrogen gas, 0.18 g of 1-methylimidazole was added under a nitrogen gas stream, and the temperature was raised to 150°C over 30 minutes, and the resulting mixture was refluxed for 30 minutes while maintaining the temperature. Thereafter, 2.4 g of 1-methylimidazole was added, and then the temperature was raised to 320°C over 2 hours and 50 minutes while distilling off acetic acid produced as a by-product and unreacted acetic anhydride. The reaction was terminated at a time point where an increase in torque was observed, and the contents were taken out. The obtained solid content was cooled to room temperature and pulverized with a coarse grinder, and then heated from room temperature to 220°C over 1 hour in a nitrogen atmosphere, and the temperature was raised from 220°C to 240°C over 0.5 hours and held at 240°C for 10 hours to allow solid phase polymerization to proceed. The resultant was cooled to obtain a liquid crystalline polyester resin B.

<Example 1>

52.25 parts by mass of the powder of the liquid crystalline aromatic polyester A, 42.75 parts by mass of the powder of the liquid crystalline aromatic polyester B and 5 parts by mass of mica "AB-25S" manufactured by Yamaguchi Mica Co., Ltd. were mixed, and melt-kneaded by using a twin screw extruder "PCM-30" manufactured by Ikegai Corp., thereby producing a pellet composed of a liquid crystalline aromatic polyester resin composition.
As the melt-kneading conditions at this time, the cylinder preset temperature of the twin screw extruder was 340°C and the screw rotation speed was 150 rpm. The cylinder preset temperature referred to here means the average value of the set temperature of a heating device provided between from the most downstream portion of the cylinder to a portion of about 2/3 of the cylinder length.
A foamed molded article was produced by the following method from the pellet produced by the above method. That is, using an all-electric molding machine "J450AD" manufactured by The Japan Steel Works, LTD. and a supercritical fluid production unit "SCF SYSTEM" manufactured by Trexel, Inc., nitrogen in a supercritical state was introduced when heating / weighing the resin in a cylinder at a preset temperature of 360°C, thereby injecting into a mold at a preset temperature of 120°C. At this time, by setting the initial thickness of the inside of the mold to 1.5 mm and moving the core back amount to a predetermined thickness (3 mm), nitrogen in a supercritical state became a gas in the mold. A foamed molded article having a flat plate shape (250 mm × 360 mm × 3 mmt) was produced by setting the core back speed at an arbitrary speed in the range of 1 to 5 mm/sec (the optimum condition was selected between this range).
As a result, a foamed molded article provided with an inner layer composed of a foamed layer and an outer layer composed of a non-foamed layer was produced.

<Example 2>

A foamed molded article provided with an inner layer composed of a foamed layer and an outer layer composed of a non-foamed layer was produced by the same method as in Example 1 except that the mixing amounts of the powder of the liquid crystalline aromatic polyester A, the powder of the liquid crystalline aromatic polyester B, and mica (AB-25S, manufactured by Yamaguchi Mica Co., Ltd.) were changed as follows.

Powder of liquid crystalline aromatic polyester A: 49.5 parts by mass
Powder of liquid crystalline aromatic polyester B: 40.5 parts by mass
Mica: 10 parts by mass

<Example 3>

A foamed molded article provided with an inner layer composed of a foamed layer and an outer layer composed of a non-foamed layer was produced by the same method as in Example 1 except that the mixing amounts of the powder of the liquid crystalline aromatic polyester A and the powder of the liquid crystalline aromatic polyester B were changed as follows, and the following talc was used in place of mica.

Powder of liquid crystalline aromatic polyester A: 53.35 parts by mass
Powder of liquid crystalline aromatic polyester B: 43.65 parts by mass
Talc (X-50, manufactured by Nippon Talc Co., Ltd.): 3 parts by mass

<Example 4>

A foamed molded article provided with an inner layer composed of a foamed layer and an outer layer composed of a non-foamed layer was produced by the same method as in Example 1 except that the mixing amounts of the powder of the liquid crystalline aromatic polyester A and the powder of the liquid crystalline aromatic polyester B were changed as follows, and the following talc was used in place of mica.

Powder of liquid crystalline aromatic polyester A: 52.25 parts by mass
Powder of liquid crystalline aromatic polyester B: 42.75 parts by mass
Talc (X-50, manufactured by Nippon Talc Co., Ltd.): 5 parts by mass

<Example 5>

A foamed molded article having a flat plate shape (250 mm × 360 mm × 2 mmt) and provided with an inner layer composed of a foamed layer and an outer layer composed of a non-foamed layer was produced by the same method as in Example 1 by mixing 49.5 parts by mass of the powder of the liquid crystalline aromatic polyester A, 40.5 parts by mass of the powder of the liquid crystalline aromatic polyester B, and 10 parts by mass of talc "X-50" manufactured by Nippon Talc Co., Ltd.

<Example 6>

A foamed molded article having a flat plate shape (250 mm × 360 mm × 3 mmt) and provided with an inner layer composed of a foamed layer and an outer layer composed of a non-foamed layer was produced by mixing 49.5 parts by mass of the powder of the liquid crystalline aromatic polyester A, 40.5 parts by mass of the powder of the liquid crystalline aromatic polyester B, and 10 parts by mass of talc "X-50" manufactured by Nippon Talc Co., Ltd., and foaming by the same method as in Example 1.
The specific gravities, weight reduction rates, elastic moduli and loss factors of the foamed molded articles of Examples 1 to 6 are listed in Table 1.
In addition, the specific gravities, elastic moduli and loss factors of non-foamed molded articles (described as "non-foamed state" in Table 1) produced by injection molding of the resin compositions used in Examples 1 to 6 without injecting a supercritical fluid, using pellets produced by the above-described method, are listed in Table 1.
In the following Table 1, the abbreviation "LCP" means "liquid crystalline aromatic polyester".

[Table 1]

|  | Composition | Non-foamed state | | | Foamed molded article | | | |
|---|---|---|---|---|---|---|---|---|
|  |  | Specific gravity | Elastic modulus (MPa) | Loss factor | Specific gravity | Weight reduction rate (%) | Elastic modulus (MPa) | Loss factor |
| Ex. 1 | LCP / Mica = 95/5 | 1.41 | 4.300 | 0.05 | 0.73 | 48 | 2,500 | 0.05 |

(continued)

| | Composition | Non-foamed state | | | Foamed molded article | | | |
|---|---|---|---|---|---|---|---|---|
| | | Specific gravity | Elastic modulus (MPa) | Loss factor | Specific gravity | Weight reduction rate (%) | Elastic modulus (MPa) | Loss factor |
| Ex. 2 | LCP / Mica = 90/10 | 1.45 | 5,400 | 0.05 | 0.80 | 45 | 4,400 | 0.04 |
| Ex. 3 | LCP / Talc = 97/3 | 1.41 | 3,200 | 0.06 | 0.56 | 60 | 2,600 | 0.05 |
| Ex. 4 | LCP / Talc = 95/5 | 1.43 | 4,100 | 0.05 | 0.70 | 51 | 3,600 | 0.05 |
| Ex. 5 | LCP /Talc = 90/10 | 1.47 | 5,100 | 0.06 | 1.09 | 26 | 3,600 | 0.05 |
| Ex. 6 | LCP / Talc = 90/10 | 1.47 | 5,100 | 0.06 | 0.79 | 46 | 2,900 | 0.06 |

As shown in the above results, in Examples 1 to 6, it was possible to achieve high weight reduction rates while the loss factor values were almost the same value as those of the non-foamed state. That is, the molded article employing the present invention was able to maintain the vibration damping properties while having a high weight reduction rate.

FIG. 5 shows a cross-sectional photograph of the foamed molded article produced in Example 1. As shown in FIG. 5, the foamed molded article produced in Example 1 had an inner layer (3) as a foamed layer and an outer layer (2) as a non-foamed layer.

[Industrial Applicability]

The present invention can provide a foamed molded article which is lightweight and excellent in vibration damping properties and a method for producing the aforementioned foamed molded article, and is therefore extremely useful industrially.

[Reference Signs List]

1: Foamed molded article; 2, 4: Non-foamed layer; 3: Foamed layer; 30: Injection molding machine; 11: Main body; 12: Mold; 21: Introduction device; 211: Gas cylinder; 212: Booster; 213: Control valve

**Claims**

1.   A foamed molded article which is a foamed molded article of a liquid crystalline aromatic polyester resin composition,

wherein said liquid crystalline aromatic polyester resin composition comprises a liquid crystalline aromatic polyester resin and a scale-like inorganic filler,
wherein said liquid crystalline aromatic polyester resin is a liquid crystalline aromatic polyester having a repeating unit (1), a repeating unit (2) and a repeating unit (3):

repeating unit (1):          $-O-Ar^1-CO-$,

repeating unit (2):          $-CO-Ar^2-CO-$,

repeating unit (3):          $-X-Ar^3-Y-$,

formula (4):          $-Ar^4-Z-Ar^5-$,

wherein

$Ar^1$ represents a phenylene group, a naphthylene group or a biphenylylene group;
$Ar^2$ and $Ar^3$ each independently represent a phenylene group, a naphthylene group, a biphenylylene group or a group represented by the above formula (4);
$Ar^4$ and $Ar^5$ each independently represent a phenylene group or a naphthylene group;
X and Y each independently represent an oxygen atom or an imino group (-NH-);
Z represents an oxygen atom, a sulfur atom, a carbonyl group, a sulfonyl group or an alkylidene group; and hydrogen atoms of $Ar^1$, $Ar^2$ or $Ar^3$ may each independently be substituted with a halogen atom, an alkyl group or an aryl group;

wherein said foamed molded article comprises an inner layer and an outer layer, said inner layer is a foamed layer, said outer layer is a non-foamed layer, and
a weight reduction rate represented by the following formula (1) is from 20 to 90 %,

$$\text{weight reduction rate } (\%) = 100 \times (dB - dA) / dB \qquad (1)$$

wherein

dB represents a true density (g/cm$^3$) of said liquid crystalline aromatic polyester resin composition,
dA represents an apparent density (g/cm$^3$) of said foamed molded article,
the true density of the liquid crystalline aromatic polyester resin composition is calculated from the weight after drying and the volume obtained from the size measurement of a used test piece cut out from a molded article in accordance with the description, and
the apparent density of the foamed molded article is calculated from the weight after drying and the volume obtained from the size measurement of a used test piece cut out from a foamed molded article in accordance with the description;

wherein

a content of the liquid crystalline aromatic polyester resin is 80 parts by mass or more and 99 parts by mass or less,
a content of the scale-like inorganic filler is 1 part by mass or more and 20 parts by mass or less, with respect to 100 parts by mass of the aforementioned resin composition, and
said scale-like inorganic filler is talc or mica.

2. The foamed molded article according to claim 1,
wherein

$Ar^1$ is a p-phenylene group or 2,6-naphthylene group,
$Ar^2$ is a p-phenylene group, m-phenylene group or a 2,6-naphthylene group, and
$Ar^3$ is a p-phenylene group or 4,4'-biphenylylene group.

3. A method for producing a foamed molded article according to claim 1 or 2, the method comprising:

a step of melt-kneading a mixture containing a liquid crystalline aromatic polyester resin composition as defined in claim 1 or 2 and a supercritical fluid, and
a step of foam molding said mixture by lowering at least one of a pressure and a temperature of said melt-kneaded mixture to below a critical point of said supercritical fluid.

4. The method for producing a foamed molded article according to claim 3,
wherein a content of said supercritical fluid in said mixture is 0.01 parts by mass or more and 10 parts by mass or less with respect to 100 parts by mass of said liquid crystalline aromatic polyester resin composition.

**Patentansprüche**

1. Ein Schaumstoff-Formgegenstand, bei dem es sich um einen Schaumstoff-Formgegenstand aus einer flüssigen kristallinen aromatischen Polyesterharzzusammensetzung handelt,

wobei die flüssige kristalline aromatische Polyesterharzzusammensetzung ein flüssiges kristallines aromatisches Polyesterharz und einen schuppenartigen anorganischen Füllstoff umfasst,

wobei das flüssige kristalline aromatische Polyesterharz ein flüssiger kristalliner aromatischer Polyester mit einer sich wiederholenden Einheit (1), einer sich wiederholenden Einheit (2) und einer sich wiederholenden Einheit (3) ist:

sich wiederholende Einheit (1): $-O-Ar^1-CO-$,

sich wiederholende Einheit (2): $-CO-Ar^2-CO-$,

sich wiederholende Einheit (3): $-X-Ar^3-Y-$,

Formel (4): $-Ar^4-Z-Ar^5-$,

wobei

$Ar^1$ eine Phenylengruppe, eine Naphthylengruppe oder eine Biphenylylengruppe darstellt;
$Ar^2$ und $Ar^3$ jeweils unabhängig eine Phenylengruppe, eine Naphthylengruppe, eine Biphenylylengruppe oder eine durch die vorstehende Formel (4) dargestellte Gruppe darstellen;
$Ar^4$ und $Ar^5$ jeweils unabhängig eine Phenylengruppe oder eine Naphthylengruppe darstellen;
X und Y jeweils unabhängig ein Sauerstoffatom oder eine Iminogruppe (-NH-) darstellen;
Z ein Sauerstoffatom, ein Schwefelatom, eine Carbonylgruppe, eine Sulfonylgruppe oder eine Alkylidengruppe darstellt; und
Wasserstoffatome von $Ar^1$, $Ar^2$ oder $Ar^3$ jeweils unabhängig mit einem Halogenatom, einer Alkylgruppe oder einer Arylgruppe substituiert sein können;
wobei der Schaumstoff-Formgegenstand eine innere Schicht und eine äußere Schicht umfasst, wobei die innere Schicht eine geschäumte Schicht ist, die äußere Schicht eine nicht-geschäumte Schicht ist und eine Gewichtsreduktionsrate, dargestellt durch die folgende Formel (1), 20 bis 90% beträgt,

$$\text{Gewichtsreduktionsrate (\%)} = 100 \times (dB - dA) / dB \qquad (1)$$

wobei

dB eine wahre Dichte ($g/cm^3$) der flüssigen kristallinen aromatischen Polyesterharzzusammensetzung darstellt,
dA eine Rohdichte ($g/cm^3$) des Schaumstoff-Formgegenstands darstellt,
die wahre Dichte der flüssigen kristallinen aromatischen Polyesterharzzusammensetzung anhand des Gewichts nach dem Trocknen und des Volumens, das anhand der Größenmessung eines verwendeten Prüfstücks, das aus einem Formgegenstand gemäß der Beschreibung ausgeschnitten wurde, erhalten wurde, gemäß der Beschreibung berechnet wird und
die Rohdichte des Schaumstoff-Formgegenstands anhand des Gewichts nach dem Trocknen und des Volumens, das anhand der Größenmessung eines verwendeten Prüfstücks, das aus einem Schaumstoff-Formgegenstand gemäß der Beschreibung ausgeschnitten wurde, erhalten wurde, gemäß der Beschreibung berechnet wird;
wobei

ein Gehalt des flüssigen kristallinen aromatischen Polyesterharzes 80 Massenteile oder mehr und 99 Massenteile oder weniger beträgt,
ein Gehalt des schuppenartigen anorganischen Füllstoffs 1 Massenteil oder mehr und 20 Massenteile oder weniger, bezogen auf 100 Massenteile der vorstehend genannten Harzzusammensetzung, beträgt und
der schuppenartige anorganische Füllstoff Talk oder Glimmer ist.

2. Der Schaumstoff-Formgegenstand nach Anspruch 1,
wobei

$Ar^1$ eine p-Phenylengruppe oder 2,6-Naphthylengruppe ist,

Ar<sup>2</sup> eine p-Phenylengruppe, m-Phenylengruppe oder eine 2,6-Naphthylengruppe ist und
Ar<sup>3</sup> eine p-Phenylengruppe oder 4,4'-Biphenylylengruppe ist.

3. Ein Verfahren zur Herstellung eines Schaumstoff-Formgegenstands nach Anspruch 1 oder 2, wobei das Verfahren umfasst:

einen Schritt des Schmelzknetens eines Gemischs, das eine flüssige kristalline aromatische Polyesterharzzusammensetzung wie in Anspruch 1 oder 2 definiert und eine überkritische Flüssigkeit enthält, und
einen Schritt des Schaumformens des Gemischs durch Senken mindestens eines aus einem Druck und einer Temperatur des schmelzgekneteten Gemischs auf unterhalb eines kritischen Punkts der überkritischen Flüssigkeit.

4. Das Verfahren zur Herstellung eines Schaumstoff-Formgegenstands nach Anspruch 3, wobei ein Gehalt der überkritischen Flüssigkeit in dem Gemisch 0,01 Massenteile oder mehr und 10 Massenteile oder weniger, bezogen auf 100 Massenteile der flüssigen kristallinen aromatischen Polyesterharzzusammensetzung, beträgt.

**Revendications**

1. Article moulé expansé qui est un article moulé expansé d'une composition de résine de polyester aromatique cristal liquide,

dans lequel ladite composition de résine de polyester aromatique cristal liquide comprend une résine de polyester aromatique cristal liquide et une charge inorganique de type tartre,
dans lequel ladite résine de polyester aromatique cristal liquide est un polyester aromatique cristal liquide ayant un motif répétitif (1), un motif répétitif (2) et un motif répétitif (3) :

motif répétitif (1) :     -O-Ar<sup>1</sup>-CO-,

motif répétitif (2) :     -CO-Ar<sup>2</sup>-CO-,

motif répétitif (3) :     -X-Ar<sup>3</sup>-Y-,

formule (4) :     -Ar<sup>4</sup>-Z-Ar<sup>5</sup>-,

dans lesquels

Ar<sup>1</sup> représente un groupe phénylène, un groupe naphtylène ou un groupe biphénylylène ;
chacun d'Ar<sup>2</sup> et Ar<sup>3</sup> représente indépendamment un groupe phénylène, un groupe naphtylène, un groupe biphénylylène ou un groupe représenté par la formule (4) ci-dessus ;
chacun d'Ar<sup>4</sup> et Ar<sup>5</sup> représente indépendamment un groupe phénylène ou un groupe naphtylène ;
chacun de X et Y représente indépendamment un atome d'oxygène ou un groupe imino (-NH-) ;
Z représente un atome d'oxygène, un atome de soufre, un groupe carbonyle, un groupe sulfonyle ou un groupe alkylidène ; et
chacun des atomes d'hydrogène d'Ar<sup>1</sup>, Ar<sup>2</sup> ou Ar<sup>3</sup> peut indépendamment être remplacé par un atome d'halogène, un groupe alkyle ou un groupe aryle ;
dans lequel ledit article moulé expansé comprend une couche intérieure et une couche extérieure, ladite couche intérieure est une couche expansée, ladite couche extérieure est une couche non expansée, et le taux de réduction de poids représenté par la formule (1) qui suit est de 20 à 90%,

$$\text{taux de réduction de poids (\%)} = 100 \times (dB - dA) / dB \qquad (1)$$

dans laquelle

dB représente la masse volumique réelle (g/cm<sup>3</sup>) de ladite composition de résine de polyester aromatique cristal liquide,
dA représente la masse volumique apparente (g/cm<sup>3</sup>) dudit article moulé expansé,

la masse volumique réelle de la composition de résine de polyester aromatique cristal liquide est calculée à partir du poids après séchage et du volume obtenu d'après la mesure de taille d'une éprouvette utilisée découpée dans un article moulé conformément à la description, et

la masse volumique apparente de l'article moulé expansé est calculée à partir du poids après séchage et du volume obtenu d'après la mesure de taille d'une éprouvette utilisée découpée dans un article moulé expansé conformément à la description ;

dans lequel

la teneur en la résine de polyester aromatique cristal liquide est de 80 parties en masse ou plus et 99 parties en masse ou moins,

la teneur en la charge inorganique de type tartre est de 1 partie en masse ou plus et 20 parties en masse ou moins pour 100 parties en masse de la composition de résine susmentionnée, et

ladite charge inorganique de type tartre est le talc ou le mica.

2. Article moulé expansé selon la revendication 1, dans lequel

$Ar^1$ est un groupe p-phénylène ou un groupe 2,6-naphtylène,

$Ar^2$ est un groupe p-phénylène, un groupe m-phénylène ou un groupe 2,6-naphtylène, et

$Ar^3$ est un groupe p-phénylène ou un groupe 4,4'-biphénylylène.

3. Méthode pour produire un article moulé expansé selon la revendication 1 ou 2, la méthode comprenant :

une étape de malaxage à l'état fondu d'un mélange contenant une composition de résine de polyester aromatique cristal liquide telle que définie dans la revendication 1 ou 2 et un fluide supercritique, et

une étape de moulage par expansion dudit mélange par abaissement d'au moins l'une parmi la pression et la température dudit mélange malaxé à l'état fondu au-dessous d'un point critique dudit fluide supercritique.

4. Méthode pour produire un article moulé expansé selon la revendication 3, dans laquelle la teneur en ledit fluide supercritique dans ledit mélange est de 0,01 partie en masse ou plus et 10 parties en masse ou moins pour 100 parties en masse de ladite composition de résine de polyester aromatique cristal liquide.

FIG. 1

FIG. 2

FIG. 3

## FIG. 4

## FIG. 5

## REFERENCES CITED IN THE DESCRIPTION

**Patent documents cited in the description**

- JP 2013185044 A
- JP 2003138054 A
- US 20120025421 A1
- JP 2003170432 A

**Non-patent literature cited in the description**

- Liquid Crystalline Polymer - Synthesis, Molding, and Application. CMC Publishing Co., Ltd, 05 June 1987, 95-105